# FASCICULE DE BREVET EUROPEEN

(11) **EP 3 718 865 B1**
(45) Date de publication et mention de la délivrance du brevet: **13.05.2026**
(21) Numéro de dépôt: 20162346.9
(22) Date de dépôt: 11.03.2020
(51) Int. Cl.: B62D 25/10, B62D 25/12, B60K 11/06, B60K 11/08

(54) **DISPOSITIF DE REFROIDISSEMENT D'UN COMPARTIMENT MOTEUR D'UN VÉHICULE ET CAPOT COMPORTANT UN TEL DISPOSITIF**
KÜHLVORRICHTUNG FÜR EINEN MOTORBEREICH EINES FAHRZEUGS, UND MIT EINER SOLCHEN VORRICHTUNG AUSGESTATTETE MOTORHAUBE
DEVICE FOR COOLING AN ENGINE COMPARTMENT OF A VEHICLE, AND BONNET PROVIDED WITH SUCH A DEVICE

(30) Priorité: 05.04.2019 FR 1903684
(43) Date de publication de la demande: 07.10.2020
(73) Titulaire: Renault s.a.s, 92100 Boulogne Billancourt (FR)
(72) Inventeur: DUPAS, ALEXANDRE, 92120 Montrouge (FR); HUBERT, FLORENT, 91190 Gif sur Yvette (FR); MOREAU, BENOIT, 28700 Umpeau (FR)
(74) Mandataire: Renault Group

(56) Documents cités:
- DE-A1- 2 242 107
- DE-C1- 3 936 852
- FR-A1- 2 661 139
- JP-U- S5 829 509
- JP-U- S5 833 376
- US-A1- 2016 356 017

## Description

### Domaine Technique de l'invention

L'invention concerne un dispositif de refroidissement d'un compartiment moteur d'un véhicule ainsi qu'un capot comportant un tel dispositif. L'invention est du domaine des véhicules pour lesquels il est essentiel de créer une ventilation adéquate pour évacuer les calories du compartiment moteur.

### Etat de la technique antérieure

Les véhicules automobiles, et en particulier les véhicules à caractère sportif, comprennent généralement un compartiment moteur nécessitant une aération spécifique pour évacuer les calories notamment à l'arrêt, après une phase de roulage. Compte tenu de la typologie même de ces véhicules, il est une quête constante à l'allègement nécessaire à la performance. Pour ce faire, il est parfois fait recours à des matériaux composites, notamment du carbone, pour la fabrication d'éléments de carrosserie, comme cela en est le cas d'un capot de fermeture du compartiment moteur. Les contraintes thermiques engendrées par un tel matériau engendrent un besoin d'aération afin d'éviter une montée en température à l'arrêt du véhicule. La création d'ouvertures d'aération directement au niveau de la partie sommitale du capot permet d'un côté une évacuation de calories mais à pour inconvénient d'engendrer un risque d'écoulement d'eau en cas de pluie.

Le document FR 2 661 139 A1 divulgue une unique ouverture d'admission d'air, une boîte collectrice d'eau et des tubulures d'évacuation. Ce document divulgue le préambule de la revendication 1.

### Présentation de l'invention

Le but de l'invention est de fournir un dispositif de refroidissement d'un compartiment moteur améliorant la situation connue de l'art antérieur, en ce sens qu'il permet de manière concomitante d'évacuer les calories du moteur tout en protégeant le compartiment moteur d'une quelconque entrée d'eau en cas de pluie, notamment lorsque le véhicule est à l'arrêt.

L'objet de l'invention est un dispositif de refroidissement, notamment par convection, d'un compartiment moteur d'un véhicule, comportant au moins un passage d'écoulement d'un flux d'air, notamment d'un flux d'air chaud en provenance du moteur, ledit passage étant pour partie réalisé par une ouverture au travers d'un capot de fermeture du compartiment moteur, chaque ouverture étant réalisée par au moins une ouverture externe ménagée au travers de la peau extérieure de capot et au moins une ouverture interne ménagée au travers de la doublure de capot, l'ouverture externe s'étendant dans un plan approximativement perpendiculaire au plan de l'ouverture interne. Une telle conception permet de créer un chemin d'écoulement d'air chaud comportant une chicane faisant barrière à l'entrée d'eau.

Selon l'invention:
- le passage est réalisé par une ouverture centrale s'étendant transversalement ; ce qui permet de dissiper le flux d'air chaud émanant de la partie centrale du compartiment moteur hors du véhicule. Compte tenu du fait que la partie centrale du compartiment moteur est parfois soumise à des températures élevées du fait de sa proximité sensiblement immédiate au groupe motopropulseur, une telle ouverture permettant alors d'évacuer la chaleur émise par le moteur lorsque le véhicule est à l'arrêt ;
- l'ouverture centrale comprend une ouverture externe séparée d'une ouverture interne par un collecteur central d'eau ; ce qui permet de récupérer l'eau de pluie afin d'éviter qu'elle ne se répande dans le compartiment moteur ;
- le passage est réalisé par au moins une ouverture latérale s'étendant longitudinalement ; ce qui permet de prélever et d'évacuer un flux d'air chaud émanant d'au moins une partie latérale du moteur située au droit de l'ouverture.

Selon un autre aspect du dispositif de l'invention:
- il comprend une grille de protection, notamment une grille métallique, s'étendant au niveau de l'ouverture ; une telle grille métallique est une paroi perforée qui permet de filtrer l'air pouvant circuler au travers de l'ouverture lorsque le véhicule est en mode de roulage, tout en créant une barrière à l'écoulement de l'air en l'état dynamique de déplacement du véhicule pour réduire la quantité d'air entrant dans le compartiment moteur et réduire la trainée aérodynamique du véhicule en mouvement.

Selon l'invention:
- l'ouverture latérale comprend une ouverture externe séparée d'une ouverture interne par un collecteur latéral d'eau ; ce qui permet de récupérer l'eau de pluie afin d'éviter qu'elle ne se répande dans le compartiment moteur, notamment au droit des parties latérales du moteur ;
- le collecteur central ou latéral d'eau est du type d'une boîte collectrice délimitée par une paroi de fond bordée d'une paroi périphérique de la doublure de capot, le collecteur d'eau comprend au moins un chéneau, notamment d'orientation sensiblement longitudinale, destiné à l'écoulement de l'eau collectée vers l'extérieur du compartiment moteur ;

Selon un autre aspect du dispositif de l'invention:
- l'extrémité avant du chéneau comprend au moins un trou d'évacuation, disposé notamment au niveau d'un bord périphérique avant du capot ;
- l'ouverture latérale est en relation avec un chéneau latéral, et l'ouverture centrale est en relation avec au moins un chéneau central, le chéneau latéral débouchant dans le chéneau central ; ce qui permet une collecte en cascade du flux d'eau à évacuer dont l'avantage est de réduire le nombre de chéneaux à utiliser ;
- le chéneau est de section transversale sensiblement en U et présente un profil sensiblement linéaire d'orientation sensiblement longitudinale ; ce qui permet de suivre le profil galbé tombant vers l'avant du véhicule du capot de fermeture du compartiment moteur ;
- la paroi périphérique comprend au moins une ouverture interne, notamment des ouvertures internes réparties pour partie le long d'une portion latérale ou transversale ; ce qui permet de communaliser les fonctions de telle sorte que la boîte collectrice d'eau communique avec le compartiment moteur pour réaliser également l'évacuation des calories par convection issue d'une circulation d'un flux d'air chaud en provenance du moteur vers l'extérieur du véhicule ;
- la paroi périphérique est inclinée par rapport à l'axe vertical de sorte que la surface de l'ouverture est augmentée ; ce qui permet d'implanter la boîte collectrice malgré la proximité du moteur par rapport à la doublure de capot ;
- la paroi de fond du collecteur latéral d'eau est sensiblement plane et inclinée vers l'intérieur par rapport à un plan horizontal d'un angle compris entre 5° et 15°, notamment d'un angle d'environ 9°, la paroi de fond comprenant une profondeur variable à laquelle le chéneau est directement en relation fluidique ; ce qui permet avantageusement de s'affranchir d'une déclinaison obtenue par exemple lorsque le véhicule est stationné d'un côté sur un trottoir et assurer un écoulement de l'eau collectée par la boîte collectrice ;
- le collecteur d'eau comprend un chéneau transversal relié à l'extrémité avant du chéneau longitudinal, le chéneau transversal comprenant au moins un trou d'évacuation ; ce qui permet d'augmenter le nombre de trous pratiqués au niveau des chéneaux pour l'évacuation de l'eau collectée.

L'invention concerne aussi un capot, notamment de fermeture d'un compartiment moteur de véhicule, caractérisé en ce qu'il comprend un dispositif de refroidissement ayant l'une quelconque des caractéristiques susmentionnées.

Le capot peut être réalisé par une opération de moulage d'au moins un matériau composite, notamment constitué d'une résine contenant au moins une fibre de verre et/ou de carbone, la fibre ayant des densités différentes selon la partie du capot à mouler.

Le capot peut comprendre un passage central et des passages latéraux d'écoulement d'un flux d'air, les passages latéraux étant symétriquement répartis de part et d'autre du passage central, ce qui permet une collecte homogène du flux d'air chaud sous capot et donc une meilleure évacuation des calories.

Le capot peut comprendre un collecteur latéral d'eau fixé sur la doublure, ce qui permet de concevoir de manière séparée la doublure de capot de la boîte collectrice d'eau, offrant ainsi la possibilité de recours à des matériaux différents. Selon un autre mode de réalisation, le capot peut comprendre un collecteur latéral d'eau réalisé par moulage de la doublure.

La peau de capot peut être réalisée avec deux plis identiques en fibre de verre, tandis qu'une partie centrale de la peau contenant l'ouverture centrale peut être réalisée avec deux plis différents, notamment l'un en fibre de verre, l'autre en fibre de carbone.

La doublure de capot peut être réalisée avec deux plis en fibre de carbone, les plis étant de densités différentes, ce qui permet d'optimiser facilement la tenue à la résistance du capot en sélectionnant la densité appropriée de fibre de carbone selon l'objectif de résistance à la déformation prédéterminée. L'invention a aussi trait à un véhicule, notamment une automobile, qui comprend un capot ayant l'une quelconque des caractéristiques précédemment mentionnées.

### Présentation des figures

Les objets, caractéristiques et avantages de la présente invention seront exposés en détail dans la description suivante d'un mode de réalisation particulier fait à titre non-limitatif en relation avec les figures jointes parmi lesquelles :
[FIG. 1] La figure 1 est une vue schématique en perspective d'une peau de capot de fermeture d'un compartiment moteur d'un véhicule comprenant un dispositif de refroidissement selon un mode de réalisation de l'invention, constitué d'ouvertures d'aération.
[FIG. 2] La figure 2 est une vue de dessous d'une doublure de capot comportant un dispositif de refroidissement pourvu d'un moyen de collecte et d'évacuation d'eau collectée par les ouvertures, selon l'invention.
[FIG. 3] La figure 3 est une vue schématique en perspective d'un capot de fermeture d'un compartiment moteur vu de dessus et comportant la peau extérieure selon la figure 1 représentée en transparence et la doublure selon la figure 2,, sur laquelle sont représentées des lignes de coupe A-A et B-B.
[FIG. 4] La figure 4 est une vue en coupe A-A du capot de la figure 3.
[FIG. 5] La figure 4 est une vue en coupe A-A du capot de la figure 3.
[FIG. 6] La figure 6 est une représentation en perspective d'un agrandissement de la doublure de capot vue de dessus afin d'illustrer un mode de réalisation de la boîte collectrice d'eau au travers de laquelle un flux d'air chaud est apte à circuler afin d'évacuer des calories vers l'extérieur du capot.

### Description détaillée

Dans ce document, l'axe X désigne l'axe longitudinal d'un véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthogonal. Ce même repère, défini par référence à un véhicule, sera aussi utilisé pour un dispositif de refroidissement, puisqu'il est monté selon une orientation spécifique sur un véhicule. De plus, on considère que le véhicule repose sur un sol horizontal.

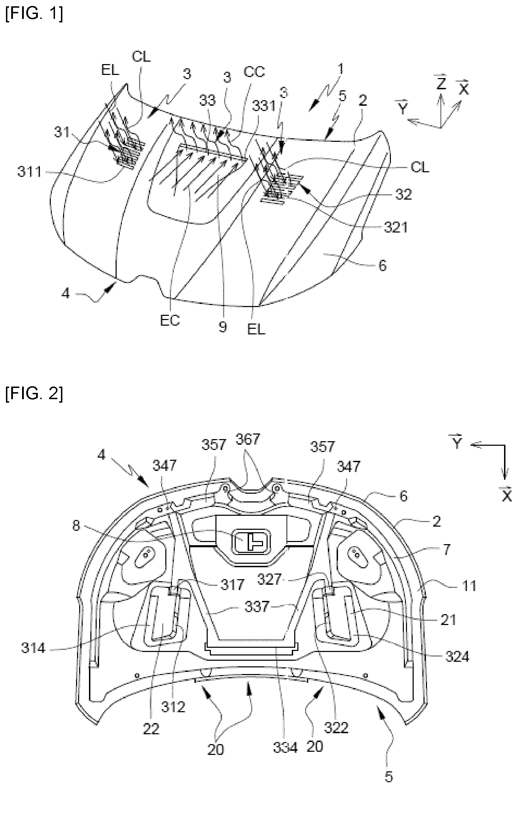

La figure 1 illustre schématiquement un capot équipé d'un dispositif de refroidissement selon un mode de réalisation de l'invention. Le véhicule peut être de toute nature. Notamment, il peut être par exemple un véhicule particulier, un véhicule utilitaire, un camion ou un bus. En particulier, le véhicule est un véhicule sportif en ce sens qu'il est conçu avec des matériaux légers et qu'il embarque un moteur performant. De part ses performances élevées, les éléments ou organes constitutifs d'un tel véhicule doivent résister à des températures élevées ou tout du moins être associer à des dispositifs de refroidissement réduisant l'impact de la chaleur sur la tenue mécanique des éléments ou organes le constituant.

Sur la figure 1, le capot 2 comprend un dispositif de refroidissement 1 qui s'illustre par la présence de passage 3 d'écoulement d'un flux d'air issu d'un échange thermique par convection. Cet échange thermique pourrait être forcé par l'utilisation d'un moyen approprié tel qu'un ventilateur. Sur la figure 1, le capot 2 comprend trois ouvertures 3, plus précisément une ouverture centrale 33 espacée de façon symétrique par des ouvertures latérales 31, 32. Comme cela est représenté, l'ouverture centrale 33 s'étend le long de l'axe Y. Les ouvertures latérales 31, 32 s'étendent le long de l'axe X selon un agencement particulier selon lequel la partie arrière des ouvertures latérales 31, 32 est disposée au niveau de l'ouverture centrale 33. La figure 1 représentant la peau extérieure 6 du capot 2 par laquelle le flux d'air chaud représentée par les flèches CL et CC s'échappe du compartiment moteur destiné à être fermé par le capot 2. L'eau de pluie est représentée par les flèches EL et EC tombant sur la face extérieure du capot, elle circule au travers des ouvertures 31, 32 et 33. Les ouvertures 31, 32, 33 comprennent respectivement une ouverture externe 311, 321 et 331 ménagées sur le peau extérieure 6 comme cela est rendu visible à la figure 1 et une ouverture interne 312, 322, 332 ménagées sur la doublure 7 de capot comme cela est rendu visible à la figure 2.

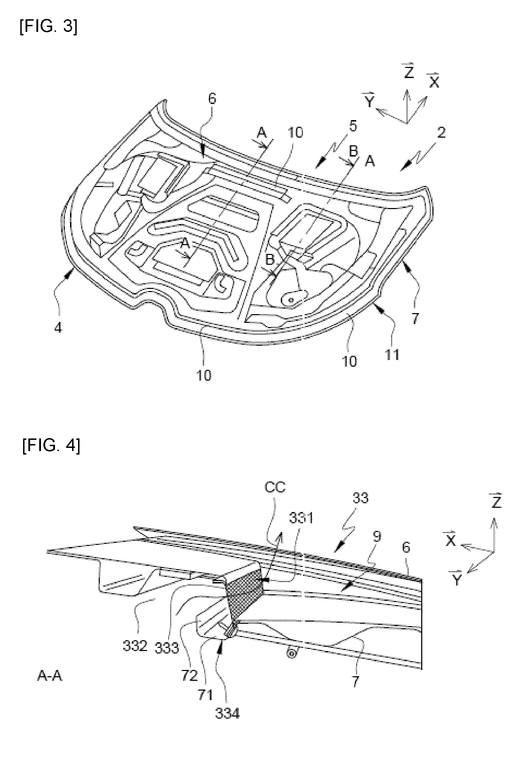

L'ouverture externe 311, 321, 331 sont agencées dans un plan qui s'étend de manière sensiblement perpendiculaire au plan de l'ouverture interne 312, 322, 332 ce qui créé une chicane rendant apte la séparation de l'eau contenu dans l'air lorsque le véhicule est en dynamique, la récupération de l'eau de pluie et l'évacuation des calories sous capot moteur lorsque le véhicule est en statique. Sur la figure 2, le dispositif de refroidissement 1 comprend au moins une boîte collectrice 20 qui est apte à collecter l'eau et laisser circuler un flux d'air vers l'extérieur du capot. La doublure 7 de capot comprend une boîte collectrice gauche 21 et une boîte collectrice droite 22 qui sont rapportées par le dessous de la doublure 7. La boîte collectrice gauche 21 ou droite 22 peut être fixée par rivetage. En variante, elle peut être fixée par collage au moyen d'un cordon de colle 326, comme cela est rendu visible sur la figure 5.

La doublure 7 est conformée de manière à évacuer l'eau collectée par au moins une boîte collectrice 21, 22 ou par un collecteur d'eau 314, 324, 334 venu soit de matière de la boîte collectrice ou soit directement de la doublure 7 de capot. La figure 4 représente en coupe l'ouverture centrale 33 réalisée par la superposition de la peau extérieure 6 et de la doublure 7 de capot comprenant respectivement une ouverture externe 331 et une ouverture interne 332. Le collecteur d'eau 334 est sensiblement linéaire, s'étendant parallèlement à l'axe Y.

Une grille 323, 333 est disposée au niveau de l'ouverture externe 311, 321, 331 afin de filtrer l'air susceptible de circuler par l'ouverture 31, 32, 33 de l'extérieur vers l'intérieur du compartiment moteur.

L'assemblage de la grille 323, 333 peut être obtenue par moulage comme on le verra plus en détail par la suite.

Chaque collecteur d'eau 314, 324, 334 est connectée à un chéneau 317, 327, 337 qui peut être directement moulé avec la doublure 7 de capot selon un mode préféré de réalisation de l'invention.

La doublure 7 comprend des chéneaux 317, 327 reliés aux collecteurs 314, 324 ou boîtes à eau 21, 22, ils seront nommés par la suite de chéneaux latéraux.

Le collecteur d'eau central 334 est relié à un chéneau 337 qui est conçu de manière à assurer un écoulement de l'eau collecté vers un bord périphérique du capot 2.

Sur la figure 2, chacune des extrémités du collecteur d'eau central 334 est ici reliée à un chéneau 337 qui s'étend de manière légèrement inclinée vers l'extérieur et l'avant 4 du capot. Le chéneau 337 est disposé entre les boîtes collectrices 21, 22. Leur inclinaison permet de contourner une partie centrale du capot qui comprend le dispositif de verrouillage 8 comprenant notamment un fil de gâche porté par le capot comme cela est visible en figure 2.

Ces chéneaux 317, 327 reliés au collecteur 334 seront nommés par la suite de chéneaux centraux.

Les collecteurs d'eau 314, 324 sont respectivement reliés à un chéneau 317, 327. Une partie avant de la boîte collectrice 21, 22 comprend une échancrure de liaison au chéneau 317, 327 de manière à créer un chemin d'écoulement de l'eau. Les chéneaux 317, 327 sont conçus de manière à assurer un écoulement de l'eau, notamment un écoulement gravitaire opéré par le galbe plongeant du capot, afin d'évacuer l'eau collecté vers un bord périphérique du capot 2. Le chéneau latéral 317, 327 rejoint le chéneau central 337 afin de se confondre et ne former partiellement qu'un seul et même chéneau d'écoulement d'eau vers l'extérieur du capot. C'est pour cela que de manière symétrique par rapport à un plan médian d'axes XZ, le capot 2 comprend au niveau de chacun des côtés gauche et droit, un chéneau latéral 327 débouchant dans un chéneau 337. La jonction présente ainsi un profil sensiblement en V.

L'extrémité avant de chaque chéneau 337 comprend au moins une ouverture 347 du type d'un trou traversant en fond de chéneau de section transversale sensiblement en U.

Le chéneau 337 communique avec un chéneau transversal 357 qui comprend également une ouverture 367. L'extrémité du chéneau 337 située en partie avant 4 du capot se prolonge vers l'intérieur du capot par un chéneau transversal 357. Cela permet en cas de stationnement du véhicule sur un plan incliné, du fait par exemple d'un stationnement partiel sur un trottoir par l'un de ses côtés, de garantir une évacuation de l'eau quand bien même celle-ci viendrait à contourner l'ouverture 347 d'extrémité du chéneau 337.

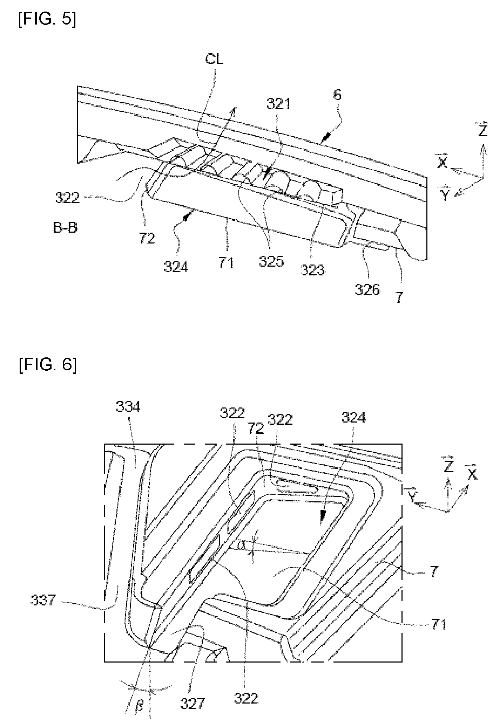

Le collecteur central ou latéral d'eau 314, 324, 334 est dans le mode de réalisation de la figure 6, du type d'une boîte collectrice délimitée par une paroi de fond 71 bordée d'une paroi périphérique 72 de profil sensiblement rectangulaire.

Les collecteurs latéraux 314 et 324 sont, à la symétrie près, sensiblement identique de sorte que dans ce qui suit, seul l'un d'entre les collecteurs latéraux va est décrit en détail sachant que l'autre collecteur contient les mêmes caractéristiques.

La paroi périphérique 72 peut ainsi comprendre des portions latérales intérieure et extérieure reliées entre elles par des portions transversales avant et arrière. La paroi de fond 71 est de préférence plane.

La paroi de fond 71 est de préférence inclinée vers l'intérieur du capot 2 selon par exemple un angle α compris entre 5° et 15°, ou plus particulièrement d'un angle d'environ 9°.

La paroi de fond 71 est de préférence inclinée vers l'avant du capot 2.

La paroi périphérique 72 comprend un évidement de connexion au chéneau latéral 317, 327 qui selon le mode de réalisation s'étend au prolongement de la portion latérale intérieure de la paroi périphérique comme cela est visible sur la figure 6. Du fait de l'inclinaison de la paroi de fond 71, la hauteur de la boite collectrice 21, 22 est plus importante du côté de la portion latérale intérieure au niveau de laquelle le chéneau latéral 317 est en relation fluidique du fait d'une échancrure réalisée dans la portion latérale avant.

La paroi périphérique 72 comprend au moins une portion avec les ouvertures internes 312, 322. Préférentiellement, la portion latérale intérieure et une portion transversale arrière comprend des ouvertures internes 312, 322. Pour augmenter la surface des ouvertures internes 312, 322, la paroi périphérique peut être inclinée d'an angle β par rapport à un plan d'axe Z compris entre 10° et 30°, ou plus particulièrement d'un angle d'environ 18°.

A titre d'exemple, du fait des inclinaisons susmentionnées, les portions latérales interne et transversale arrière présentent une section sensiblement rectangulaire, notamment trapézoïdale. La portion latérale interne comprend de préférence deux ouvertures internes 322 ayant chacune une superficie comprise entre 10 et 20 cm², respectivement 12cm² et 14 cm² par exemple. La portion transversale arrière comprend de préférence une ouverture interne 322 ayant une superficie comprise entre 5 et 10 cm², préférentiellement 6,5 cm². comme cela est visible sur la figure 6.

Le collecteur centrale 334 est visible à la figure 4 selon une coupe A-A de la figure 3.

Le collecteur 334 comprend une paroi de fond 71 prolongée à l'arrière par une paroi périphérique 72. Les parois de fond 71 et périphériques 72 sont sensiblement linéaires de sorte qu'elles délimitent une gouttière de collecte d'eau. L'ouverture interne 332 est disposée à l'arrière de la gouttière. Du fait de cette architecture en chicane, le flux d'air chaud CC circulant au travers de l'ouverture 3 suit une direction sensiblement en S en ce sens que le flux d'air circule de bas en haut, logé dans la zone tampon située derrière la grille 333, puis s'évacue vers l'avant en traversant la grille 333 pour rejoindre l'environnement extérieur.

L'ouverture latérale 31, 32 ou centrale 33 comprend une grille de protection 323, 333. La grille de protection 323 de l'ouverture latérale 321 est sensiblement parallèle à la peau extérieure 6 recouvrant la doublure 7 de capot 2 par superposition, comme cela est notamment visible en figure 5.

La grille 333 de l'ouverture centrale 331 est sensiblement perpendiculaire à la peau extérieure 6 recouvrant la doublure 7 de capot 2 par superposition, comme cela est notamment visible en figure 4.

La grille est une paroi perforée qui présente un profil sensiblement plan.

La grille de protection 323 de l'ouverture latérale 321 peut être fixée à la peau extérieure 6 par moulage. Selon une variante de réalisation, la grille de protection 323 est interposée entre la boîte collectrice gauche 21 ou droite 22 et la doublure 7 de capot.

La grille de protection 333 de l'ouverture centrale 331 peut être fixée par vissage à la doublure 7 de capot, comme cela est visible sur la figure 4. Elle peut être solidarisée à la peau extérieure 6 par moulage ou surmoulage. Selon une variante de réalisation la grille de protection 33 peut être fixée à la boîte collectrice par collage avant que cette dernière ne soit rapportée contre la peau extérieure 6. Selon une autre variante, la grille de protection est fixée par rivetage et/ou vissage à la doublure 7 de capot.

Le procédé de fabrication du capot 2 va être à présent détaillé.

L'ouverture latérale 31, 32 comprend une série des pontets 325 de liaison répartis de manière homogène dans l'ouverture de telle sorte que l'écart en X entre deux pontets 325 est sensiblement également à l'écart en X entre un pontet d'extrémité et un bord transversal avant ou arrière de l'ouverture.

Les pontets 325 de liaison sont parallèles entre eux, reliant les bords latéraux gauche et droit de l'ouverture.

Sur la figure 5, chaque pontet 325 s'étend le long de l'axe Y. Chaque pontet 325 de liaison a approximativement un profil linéaire de section incurvée, notamment de manière convexe par rapport à la face extérieure du capot, ce qui tend à améliorer l'écoulement de l'air en dynamique.

Avantageusement, la grille de protection 323 est en appui contre la face inférieure des pontets 325 ce qui tend à améliorer la rigidité de la grille du fait d'un recouvrement tout du moins partiel, afin de protéger la grille contre toute intrusion de projectile venant notamment de l'extérieur.

Le capot comprenant le dispositif de refroidissement précédemment détaillé est préférentiellement réalisé par moulage d'au moins un matériau composite.

Le capot est réalisé par une opération de moulage d'au moins un matériau composite.

Le composite peut comprendre une résine ainsi qu'au moins une nappe tissée qui est composée de fibre de verre et/ou de fibre de carbone.

En disposant une ou plusieurs nappes tissées ayant des natures différentes de fibre, il est possible aux différentes parties du capot d'avoir des densités différentes, donc des tenues à la déformation plus ou moins élevées. La nappe tissée peut ainsi avoir une première, deuxième ou troisième densité. La première densité peut être supérieure à la deuxième densité, la deuxième densité peut être supérieure à la troisième densité. A titre d'exemple, la première densité peut être obtenue par une nappe ayant de la fibre de verre, la deuxième densité et la troisième densité ayant des fibres réalisées à partir de fibre de carbone. A titre d'exemple, la première densité peut être d'environ 700 g/mm², la deuxième densité d'environ 630 g/mm² tandis que la troisième densité peut être d'approximativement 200g/mm².

La zone centrale recevant le dispositif de verrouillage ainsi que les zones arrière de fixation des charnières d'articulation du capot peuvent avoir une rigidité supérieure au reste du capot. La doublure 7 de capot peut ainsi comprendre localement des parties de rigidité augmentée constituées de deux nappes tissées en fibre de carbone ayant la deuxième densité et d'une nappe tissée en fibre de carbone ayant la troisième densité.

Le reste de la doublure 7 de capot 2 peut comprendre un assemblage par superposition de nappes tissées ayant respectivement les deuxième et troisième densités.

La doublure 7 de capot 2 comprenant les boîtes collectrice 21, 22 qui peuvent être réalisées durant une même opération de moulage.

Selon une variante de réalisation, les boîtes collectrices 21, 22 sont réalisées de manière indépendante à la doublure 7 de capot 2. Les boîtes collectrices 21, 22 peuvent être réalisées en plastique, puis fixées par collage au capot 2, notamment sous la doublure 7.

Préalablement à la pose des nappes tissées dans le moule, les grilles 313, 323 sont positionnées dans le moule.

La peau extérieure 6 de capot est également réalisée par moulage d'un matériau composite, par exemple selon deux nappes tissées ayant la première densité.

Selon une variante de réalisation, la partie centrale de la peau extérieure 6 dans laquelle est réalisée l'ouverture centrale 33 est réalisée par deux nappes tissées différentes, l'une ayant la deuxième densité, l'autre la troisième densité.

Compte tenu du fait que l'ouverture externe 331 est sensiblement verticale, la peau extérieure 6 comprend un renfoncement 9 ayant une hauteur variable. Un tel renfoncement 9 forme une écope d'air présentant une section transversale variable. Le profil du renfoncement 9 est à double composantes variables en Y et en Z, en ce sens que le long de l'axe X :
- le profil de renfoncement 9 évolue d'un bord avant venant à affleurement de la zone adjacente de la peau extérieure 6 vers un bord arrière saillant en ce sens qu'il créé localement un décrochement en Z comme cela est visible sur la figure 4, et que
- l'écart en Y entre les bords latéraux du renfoncement 9 évolue de manière croissante de l'avant vers l'arrière comme cela est visible sur la figure 1.

La profondeur en Z de la partie arrière de l'enfoncement 9 correspondant sensiblement à la hauteur de l'ouverture externe 331 de l'ouverture centrale 33. La peau extérieure 6 est collée à la doublure 7 par un cordon 10 de colle qui s'étend pour partie le long d'une nervure périphérique 11 formant un anneau continu d'assemblage. La peau extérieure 6 est collée à la doublure 7 par des brins de cordon 10 répartis de manière homogène sur toute la surface du capot.

Le refroidissement des organes sous capot est ainsi rendu possible à l'arrêt du véhicule par le passage central et des passages latéraux d'écoulement d'un flux d'air, ces derniers étant symétriquement répartis de part et d'autre du passage central.

Le capot 2 est destiné à un véhicule, notamment une automobile, qui est préférentiellement du type d'un véhicule à caractère sportif pour lequel la légèreté est recherchée en vu d'améliorer les performances dynamiques.

Grâce à l'invention, la contrainte de conception impose le recours à une matière rigide et légère qu'offre un composite en fibre. L'assemblage de la peau extérieure 6 à une doublure 7 par collage est dépendant de la température sous capot de sorte qu'il est nécessaire de limiter toute montée en température qui pourrait altérer la qualité d'assemblage, les colles d'assemblage étant plus sensiblement aux montées en température que l'assemblage par soudage opéré pour les capots en acier.

Avec le capot de l'invention, le refroidissement en statique des organes sous capot moteur est amélioré par un échange thermique avec l'air extérieur, notamment par convection, avec un flux d'air chaud s'écoulant au travers des diverses ouvertures 31, 32, 33 traversant le capot 2.

Les ouvertures du capot étant en relation avec des moyens de collecte et d'évacuation des eaux de pluie lorsque le véhicule est à l'arrêt, telles que les boîtes collectrices 21, 22, les organes sous capot sont protégés de l'eau reçu sur la face externe de capot, cette eau étant évacuée par les différents chéneaux formés dans le capot 2.

Le véhicule ayant un tel capot en matière composite est plus léger ce qui contribue à procurer des sensations de puissance et de rapidité exceptionnelles à son conducteur.

## Revendications

1. Dispositif de refroidissement (1) par convection, d'un compartiment moteur d'un véhicule, comportant au moins un passage (3) d'écoulement d'un flux d'air chaud en provenance du moteur, ledit passage étant pour partie réalisé par une ouverture (31, 32, 33) au travers d'un capot (2) de fermeture du compartiment moteur, chaque ouverture (3) étant réalisée par au moins une ouverture externe (311, 321, 331) ménagée au travers de la peau extérieure (6) de capot et au moins une ouverture interne (312, 322, 332) ménagée au travers de la doublure (7) de capot, l'ouverture externe (311, 321, 331) s'étendant dans un plan approximativement perpendiculaire au plan de l'ouverture interne (312, 322, 332), **caractérisé en ce que** le passage (3) est réalisé par une ouverture centrale (33) s'étendant transversalement et par au moins une ouverture latérale (31, 32) s'étendant longitudinalement, l'ouverture centrale (33) comprenant une ouverture externe (331) séparée d'une ouverture interne (332) par un collecteur central d'eau (334), l'ouverture latérale (31, 32) comprenant une ouverture externe (311, 321) séparée d'une ouverture interne (312, 322) par un collecteur latéral d'eau (314, 324), **et en ce que** le collecteur central ou latéral d'eau (314, 324, 334) est du type d'une boîte collectrice délimitée par une paroi de fond (71) bordée d'une paroi périphérique (72) de la doublure de capot (7), le collecteur d'eau (314, 324, 334) comprend au moins un chéneau (317, 327, 337), notamment d'orientation sensiblement longitudinale, destiné à l'écoulement de l'eau collectée vers l'extérieur du compartiment moteur.

2. Dispositif de refroidissement (1) selon la revendication précédente, **caractérisé en ce que** l'ouverture latérale (31, 32) est en relation avec un chéneau latéral (317, 327), et l'ouverture centrale (33) est en relation avec au moins un chéneau central (337), le chéneau latéral (317, 327) débouchant dans le chéneau central (337).

3. Dispositif selon au moins une des revendications précédentes, **caractérisé en ce qu'**il comprend une grille de protection (323, 333), notamment une grille métallique, s'étendant au niveau de l'ouverture (31, 32, 33).

4. Dispositif selon au moins une des revendications précédentes, **caractérisé en ce que** l'extrémité avant du chéneau (317, 327, 337) comprend au moins un trou d'évacuation (347), disposé notamment au niveau d'un bord périphérique avant (4) du capot (2).

5. Capot (2), notamment de fermeture d'un compartiment moteur de véhicule, **caractérisé en ce qu'**il comprend un dispositif de refroidissement selon l'une quelconque des revendications précédentes.

6. Véhicule, notamment une automobile, **caractérisé en ce qu'**il comprend un capot (2) selon la revendication précédente.

## Patentansprüche

1. Vorrichtung zum Kühlen (1) durch Konvektion für einen Motorraum eines Fahrzeugs, aufweisend mindestens einen Durchgang (3) für den Durchfluss eines aus dem Motor kommenden Heißluftstroms, wobei der Durchgang teilweise durch eine Öffnung (31, 32, 33) durch eine den Motorraum verschließende Haube (2) gebildet wird, wobei jede Öffnung (3) durch mindestens eine äußere Öffnung (311, 321, 331), die durch die Außenhaut (6) der Haube hindurch ausgebildet ist, und mindestens eine innere Öffnung (312, 322, 332) gebildet wird, die durch die Haubenverkleidung (7) hindurch ausgebildet ist, wobei sich die äußere Öffnung (311, 321, 331) in einer Ebene erstreckt, die annähernd senkrecht zu der Ebene der inneren Öffnung (312, 322, 332) verläuft, **dadurch gekennzeichnet, dass** der Durchgang (3) durch eine sich quer erstreckende mittlere Öffnung (33) und durch mindestens eine sich in Längsrichtung erstreckende seitliche Öffnung (31, 32) gebildet wird, wobei die mittlere Öffnung (33) eine äußere Öffnung (331) enthält, die durch einen mittleren Wassersammler (334) von einer inneren Öffnung (332) getrennt ist, wobei die seitliche Öffnung (31, 32) eine äußere Öffnung (311, 321) umfasst, die durch einen seitlichen Wassersammler (314, 324) von einer inneren Öffnung (312, 322) getrennt ist, und dadurch, dass der mittlere oder seitliche Wassersammler (314, 324, 334) die Form eines Sammelkastens aufweist, der durch eine Bodenwand (71) begrenzt ist, die von einer Umfangswand (72) der Haubenverkleidung (7) eingefasst ist, der Wassersammler (314, 324, 334) mindestens eine Rinne (317, 327, 337) umfasst, insbesondere mit im Wesentlichen Längsausrichtung, die dazu bestimmt ist, das gesammelte Wasser aus dem Motorraum nach außen abzuleiten.

2. Kühlvorrichtung (1) nach dem vorhergehenden Anspruch, **dadurch gekennzeichnet, dass** die seitliche Öffnung (31, 32) mit einer seitlichen Rinne (317, 327) in Verbindung steht und die mittlere Öffnung (33) mit mindestens einer mittleren Rinne (337) in Verbindung steht, wobei die seitliche Rinne (317, 327) in die mittlere Rinne (337) mündet.

3. Vorrichtung nach mindestens einem der vorhergehenden Ansprüche, **dadurch gekennzeichnet, dass** sie ein Schutzgitter (323, 333), insbesondere ein Metallgitter, umfasst, das sich auf Höhe der Öffnung (31, 32, 33) erstreckt.

4. Vorrichtung nach mindestens einem der vorhergehenden Ansprüche, **dadurch gekennzeichnet, dass** das vordere Ende der Rinne (317, 327, 337) mindestens ein Abflussloch (347) umfasst, das insbesondere im Bereich einer vorderen Umfangskante (4) der Haube (2) angeordnet ist.

5. Haube (2), insbesondere zum Verschließen eines Fahrzeugmotorraums, **dadurch gekennzeichnet, dass** sie eine Kühlvorrichtung nach einem der vorhergehenden Ansprüche umfasst.

6. Fahrzeug, insbesondere ein Kraftfahrzeug, **dadurch gekennzeichnet, dass** es eine Haube (2) nach dem vorhergehenden Anspruch umfasst.

## Claims

1. Convection cooling device (1) for an engine compartment of a vehicle, comprising at least one passage (3) for the flow of a hot air stream coming from the engine, said passage being partly formed by an opening (31, 32, 33) through a bonnet (2) for closing the engine compartment, each opening (3) being formed by at least one external opening (311, 321, 331) provided through the bonnet outer skin (6) and at least one internal opening (312, 322, 332) provided through the bonnet lining (7), the external opening (311, 321, 331) extending in a plane approximately perpendicular to the plane of the internal opening (312, 322, 332), **characterized in that** the passage (3) is formed by a transversely extending central opening (33) and by at least one longitudinally extending lateral opening (31, 32), the central opening (33) comprising an external opening (331) separated from an internal opening (332) by a central water manifold (334), the lateral opening (31, 32) comprising an external opening (311, 321) separated from an internal opening (312, 322) by a lateral water manifold (314, 324), and **in that** the central or lateral water manifold (314, 324, 334) is of the header tank type delimited by a bottom wall (71) bordered by a peripheral wall (72) of the bonnet lining (7), the water manifold (314, 324, 334) comprising at least one gutter (317, 327, 337), notably of substantially longitudinal orientation, for the flow of the water collected towards the outside of the engine compartment.

2. Cooling device (1) according to the preceding claim, **characterized in that** the lateral opening (31, 32) is in relation to a lateral gutter (317, 327), and the central opening (33) is in relation to at least one central gutter (337), the lateral gutter (317, 327) emerging into the central gutter (337).

3. Device according to at least one of the preceding claims, **characterized in that** it comprises a protective grate (323, 333), notably a metal grate, extending at the opening (31, 32, 33).

4. Device according to at least one of the preceding claims, **characterized in that** the front end of the gutter (317, 327, 337) comprises at least one drainage hole (347), arranged notably at a front peripheral edge (4) of the bonnet (2).

5. Bonnet (2), notably for closing a vehicle engine compartment, **characterized in that** it comprises a cooling device according to any one of the preceding claims.

6. Vehicle, notably a motor vehicle, **characterized in that** it comprises a bonnet (2) according to the preceding claim.
